# EUROPEAN PATENT APPLICATION

(11) **EP 4 791 057 A1**
(43) Date of publication of application: **12.08.2026**
(21) Application number: 24887464.6
(22) Date of filing: 19.07.2024
(51) Int. Cl.: H04W 12/03, H04W 12/06, H04W 12/08

(54) **NETWORK CONNECTION METHOD, ELECTRONIC DEVICE, AND COMPUTER-READABLE STORAGE MEDIUM**

(30) Priority: 09.11.2023 CN 202311503284
(71) Applicant: Honor Device Co., Ltd., Shenzhen, Guangdong 518040 (CN)
(72) Inventor: YU, Jianwen, Shenzhen, Guangdong 518040 (CN); LIAN, Chaofeng, Shenzhen, Guangdong 518040 (CN); YANG, Peng, Shenzhen, Guangdong 518040 (CN)
(74) Representative: Gill Jennings & Every LLP
(86) International application number: PCT/CN2024/106300
(87) International publication number: WO 2025/097840

(57) **Abstract**

This application provides a network connection method, an electronic device, and a computer-readable storage medium. When an access point device uses a WPA2/WPA3 hybrid encryption mode, if a station device does not have a WPA3 encryption capability and advertises support for WPA3 encryption, the access point device may guide the station device to perform access authentication by using WPA2 encryption. In this way, the station device can successfully be connected to a network in which the access point device is located, thereby improving compatibility of the access point device when using the WPA2/WPA3 hybrid encryption mode.

## Description

This application claims priority to Chinese Patent Application No. 202311503284.1, filed with the China National Intellectual Property Administration on November 9, 2023, and entitled "NETWORK CONNECTION METHOD, ELECTRONIC DEVICE, AND COMPUTER-READABLE STORAGE MEDIUM", which is incorporated herein by reference in its entirety.

### TECHNICAL FIELD

This application relates to the field of terminal and communication technologies, and in particular, to a network connection method, an electronic device, and a computer-readable storage medium.

### BACKGROUND

A wireless fidelity (wireless fidelity, WiFi) technology is a technology that connects an electronic device to a local area network in a wireless connection manner. An electronic device providing the local area network may be referred to as an access point device, and an electronic device connected to the local area network through the access point device may be referred to as a station device. An early WiFi is usually encrypted by using a WPA2 (Wi-Fi protected access 2) wireless encryption standard, and the station device needs to complete procedures of an encryption and authentication method specified in WPA2 with the access point device before the station device can be connected to the local area network. Because security of the WiFi encrypted by using WPA2 is severely affected by a security vulnerability of WPA2, a wireless security standard with higher security, WPA3 (Wi-Fi protected access 3), is generated.

Currently, many station devices do not have a capability of completing encryption and authentication by using WPA3 with an access point device, and some access point devices use a WPA2/WPA3 hybrid encryption mode when encrypting WiFi. When a station device supports WPA3, an access point device may establish a connection to the station device by using an encryption and authentication method specified in WPA3; and when a station device supports only WPA2, an access point device may establish a connection to the station device by using the encryption and authentication method specified in WPA2. However, some station devices that support only WPA2 have a compatibility problem when connecting to an access point device that uses the WPA2/WPA3 hybrid encryption mode. Consequently, such station devices cannot successfully establish a connection to the access point device.

### SUMMARY

This application provides a network connection method, an electronic device, and a computer-readable storage medium. When an access point device uses a WPA2/WPA3 hybrid encryption mode, if the access point device determines that a to-be-accessed station device does not have a WPA3 encryption capability and advertises support for WPA3, the access point device may guide the station device to establish a connection to the access point device by using WPA2. In this way, some station devices that have a compatibility problem can successfully access a local area network, thereby ensuring that a user can normally use these station devices.

According to a first aspect, this application provides a network connection method. The method is applied to a first electronic device, the first electronic device is configured to provide a network access service, and the first electronic device uses a WPA2 and WPA3 hybrid encryption mode. The method includes: The first electronic device receives a first message, where the first message indicates that a second electronic device requests to access the network; the first electronic device receives a second message, where the second message indicates the second electronic device to use open system authentication; the first electronic device receives a third message, where the second electronic device advertises support for WPA3 encryption in the third message; the first electronic device determines, based on the second message and the third message, that the second electronic device does not have a WPA3 encryption capability; and the first electronic device establishes a connection to the second electronic device by using WPA2 encryption.

The first electronic device herein may be an access point device, and the second electronic device may be a station device. In other words, when the first electronic device uses the WPA2/WPA3 hybrid encryption mode, if the second electronic device uses the open system authentication and advertises support for the WPA3 encryption, the second electronic device enters a fast connection procedure of WPA3. When determining that the second electronic device does not have a parameter necessary for a fast connection of WPA3, the first electronic device may guide the second electronic device to establish a connection to the first electronic device by using WPA2. In this way, some problem devices may be guided to a connection procedure of WPA2, to be successfully connected to the local area network, thereby ensuring normal use of a user.

With reference to the first aspect, in some embodiments, that the first electronic device determines, based on the second message and the third message, that the second electronic device does not have a WPA3 encryption capability includes: When determining, based on the second message, that the second electronic device uses the open system authentication, the first electronic device determines that the third message does not carry a fast connection key and/or a field supporting a protected management frame.

In other words, the first electronic device determines, by verifying the fast connection key and the field supporting a protected management frame in the third message, whether the second electronic device supports the WPA3 encryption. This is because the fast connection procedure of WPA3 is entered when the open system authentication is selected and the second electronic device supports WPA3, so that the third message needs to include the fast connection key and the field of a protected management frame. When the first electronic device determines that the third message does not include a parameter necessary for a fast connection of WPA3, the second electronic device may be an electronic device that only supports WPA2 and mistakenly advertises support for WPA3. In this case, the first electronic device may attempt to establish a connection to the second electronic device by using WPA2, to improve compatibility of the first electronic device in the WPA2/WPA3 hybrid mode.

With reference to the first aspect, in some embodiments, before the receiving, by the first electronic device, a second message, the method further includes: The first electronic device sends a fourth message to the second electronic device, where the fourth message indicates that the first electronic device supports WPA2 encryption and WPA3 encryption. In other words, when the first electronic device uses the WPA2/WPA3 hybrid encryption mode, the first electronic device is to advertise support for both the WPA2 encryption and the WPA3 encryption. The first electronic device may indicate, by advertising support for both PSK encryption and SAE encryption, that the first electronic device supports both the WPA2 encryption and the WPA3 encryption.

With reference to the first aspect, in some embodiments, the second electronic device further advertises support for the WPA2 encryption in the third message. Some second electronic devices that have problems advertise support for both the WPA2 encryption and the WPA3 encryption. Therefore, the first electronic device may determine whether the second electronic device advertises support for WPA2 when the second electronic device cannot use the WPA3 encryption. When the first electronic device determines that the second electronic device further supports the WPA2 encryption, the first electronic device may establish a connection to the second electronic device by using an encryption procedure of WPA2 instead of the fast connection of WPA3.

With reference to the first aspect, in some embodiments, the second electronic device does not advertise support for the WPA2 encryption in the third message, and before that the first electronic device establishes a connection to the second electronic device by using WPA2 encryption, the method further includes: The first electronic device sends a fifth message to the second electronic device, where the fifth message indicates that the second electronic device fails to connect to the network; the first electronic device receives a sixth message, where the sixth message indicates that the second electronic device requests to access the network; the first electronic device sends a seventh message to the second electronic device, where the seventh message indicates that the first electronic device supports only the WPA2 encryption; and the first electronic device receives an eighth message, where the second electronic device advertises support for the WPA2 encryption in the eighth message.

In other words, some second electronic devices that have problems only advertise support for the WPA3 encryption, and do not advertise that the second electronic devices support the WPA2 encryption. Therefore, the connection fails because the second electronic device does not carry the parameter necessary for WPA3. When receiving an access request of the second electronic device again, the first electronic device may advertise that the first electronic device is an access point device that only supports WPA2, and may attempt to guide the problem device to establish a connection to the first electronic device by using WPA2. In this way, it can be ensured that some problem devices that only have a WPA2 encryption capability and mistakenly advertise support for WPA3 can access the local area network, thereby ensuring normal use of the user.

With reference to the first aspect, in some embodiments, after that the first electronic device sends a fifth message to the second electronic device, the method further includes: The first electronic device stories a MAC address of the second electronic device into a first list, where the first list is used for storing a MAC address of an electronic device that advertises support for the WPA3 encryption but that cannot be connected to the network by using the WPA3 encryption; and after that by the first electronic device receives a sixth message, the method further includes: The first electronic device determines that the MAC address of the second electronic device is in the first list.

With reference to the first aspect, in some embodiments, the method further includes: The first electronic device determines that duration for which the MAC address of the second electronic device is stored in the first list exceeds first duration; and the first electronic device deletes the MAC address of the second electronic device from the first list.

In other words, the first electronic device may store a MAC address of the problem device into the first list within a specific period of time. When the problem device performs connection again, the first electronic device may query whether the MAC address of the device exists in the first list. In this way, the first electronic device can guide such problem device to establish a connection by using WPA2.

With reference to the first aspect, in some embodiments, the method further includes: The first electronic device receives a ninth message, where the ninth message indicates that a third electronic device requests to access the network; the first electronic device receives a tenth message, where the tenth message indicates that the third electronic device use the open system authentication; the first electronic device receives an eleventh message, where the third electronic device advertises support for the WPA3 encryption in the eleventh message; the first electronic device determines, based on the tenth message and the eleventh message, that the third electronic device has the WPA3 encryption capability; and the first electronic device establishes a connection to the third electronic device by using the WPA3 encryption. The third electronic device herein may be a station device. In other words, for a station device having a WPA3 encryption capability, when the open system authentication is used and the station device advertises support for WPA3, the first electronic device can still establish a connection to the station device by using the fast connection WPA3.

According to a second aspect, this application provides an electronic device. The electronic device includes a memory, and a processor coupled to the memory, and the memory stores a computer program. When the processor executes the computer program, the electronic device is enabled to implement the method according to any item of the first aspect.

According to a third aspect, the application provides a computer-readable storage medium. The computer-readable storage medium stores a computer program or computer instructions. The computer program and computer instructions are executed by a processor to implement the method according to any item of the first aspect.

According to a fourth aspect, an embodiment of this application provides a computer program product. When the computer program product is executed by a processor, the method according to any item of the first aspect is implemented.

According to a fifth aspect, an embodiment of this application provides a chip. The chip includes a processor and a memory. The memory is configured to store a computer program or computer instructions. The processor is configured to execute the computer program or computer instructions stored in the memory, to enable the chip to perform the method according to any item of the first aspect.

The solutions provided in the second aspect to the fifth aspect are for implementing or cooperating to implement the method correspondingly provided in the first aspect, and therefore, can achieve beneficial effects the same as or corresponding to those in the first aspect. Details are not described herein again.

### BRIEF DESCRIPTION OF DRAWINGS

FIG. 1 is a schematic diagram of an architecture of a communication system 10 according to an embodiment of this application;
FIG. 2 is a schematic diagram of a procedure in which a normal connection is established between a station device and an access point device according to an embodiment of this application;
FIG. 3 is a schematic diagram of a field of robust security network information according to an embodiment of this application;
FIG. 4 is a schematic diagram of a procedure in which a fast connection is performed between a station device and an access point device according to an embodiment of this application;
FIG. 5 is a diagram of a procedure in which a station device fails to connect to an access point device according to an embodiment of this application;
FIG. 6 is a diagram of a procedure in which an access point device guides a station device to establish a connection by using WPA2 according to an embodiment of this application;
FIG. 7 is another diagram of a procedure in which a station device fails to connect to an access point device according to an embodiment of this application;
FIG. 8 is another diagram of a procedure in which an access point device guides a station device to establish a connection by using WPA2 according to an embodiment of this application;
FIG. 9 is a flowchart of a network connection method according to an embodiment of this application; and
FIG. 10 is a schematic diagram of a structure of an electronic device 100 according to an embodiment of this application.

### DESCRIPTION OF EMBODIMENTS

Terms used in the following embodiments of this application are merely intended to describe specific embodiments, but are not intended to limit this application. The terms "one", "a", "the", "the foregoing", "this", and "the one" of singular forms used in this specification and the appended claims of this application are also intended to include plural forms, unless otherwise specified in the context clearly. It should also be understood that the term "and/or" used in this application means and includes any or all possible combinations of one or more listed items.

The terms "first" and "second" mentioned below are used merely for the purpose of description, and shall not be understood as indicating or implying relative importance or implying a quantity of indicated technical features. Therefore, a feature defined by "first" or "second" may explicitly or implicitly include one or more features. In the descriptions of embodiments of this application, unless otherwise stated, "a plurality of" means two or more.

A WiFi technology is a technology that connects an electronic device to a local area network in a wireless connection manner. WiFi may be established according to the IEEE 802.11 standard. An access point (access point, AP) and a station (station, STA) in a WiFi network are defined in the IEEE 802.11 standard. The access point (or referred to as an access point device) may connect a station (or referred to as a station device) connected to the access point and the local area network by using a wireless medium (wireless medium, WM). Data transmission and resource sharing may be performed between electronic devices in the local area network.

To improve security of a WiFi network connection, the WiFi alliance formulates a WPA2 wireless encryption standard (referred to as WPA2 or WPA2 encryption for short below). WPA2 may include a link authentication method, an access authentication method, a data encryption method, and the like. The station device can access the local area network only when completing procedures such as link authentication, access authentication, and data encryption specified in WPA2 with the access point device. However, with discovery of a security vulnerability in WPA2, if the WiFi network continues to use the WPA2 encryption, security is low. Based on this, the WiFi alliance proposes another wireless security standard, that is, a WPA3 wireless encryption standard (referred to as WPA3 or WPA3 encryption for short below), to replace the WPA2 encryption for security authentication. The WPA3 encryption has higher security compared to the WPA2 encryption. Because many station devices do not have a capability of establishing a connection to the access point device by using WPA3, if the access point device supports only the WPA3 encryption, the station devices cannot be normally connected to the access point device. To enable a station device that currently does not support the WPA3 encryption to access an access point device that uses WPA3, some access point devices use a WPA2/WPA3 hybrid encryption mode (or referred to as WPA2/WPA3 hybrid authentication or an WPA2/WPA3 mode) of an encryption manner. That the station device does not support the WPA3 encryption means that the station device cannot or cannot fully complete the link authentication method, the access authentication method, the data encryption method, or the like specified in the WPA3 wireless encryption standard.

When a connection is performed between a station device and an access point device, wireless encryption manners supported by the two parties are determined. The station device may advertise a supported wireless encryption manner to the access point device. In this way, the access point device may select, based on the wireless encryption manner supported by the station device, a corresponding wireless encryption manner to perform identity authentication and encryption with the station device. A wireless encryption capability herein may include but is not limited to WPA2 and WPA3. When the access point device uses the WPA2/WPA3 hybrid encryption mode as an access authentication manner, if the station device advertises, in a packet, support for the WPA3 encryption, the access point device may establish a connection to the station device by using the WPA3 encryption; and if the station device advertises, in a packet, support for only the WPA2 encryption, the access point device may establish a connection to the station device by using the WPA2 encryption. When the station device advertises, in a packet, support for both the WPA2 encryption and the WPA3 encryption, the access point device may establish a connection to the station device by preferentially using the WPA3 encryption.

However, when the access point device uses the WPA2/WPA3 hybrid encryption mode, some station devices do not support the WPA3 encryption, but advertise, in a packet, support for the WPA3 encryption. Such station devices may be normally connected to an access point device that uses a WPA2-only encryption mode but cannot be connected to an access point device that uses the WPA2/WPA3 hybrid encryption mode. Consequently, a user cannot normally use the station device. The WPA2-only encryption mode means that the access point device only allows the station device to establish a connection to the access point device by using the WPA2 encryption.

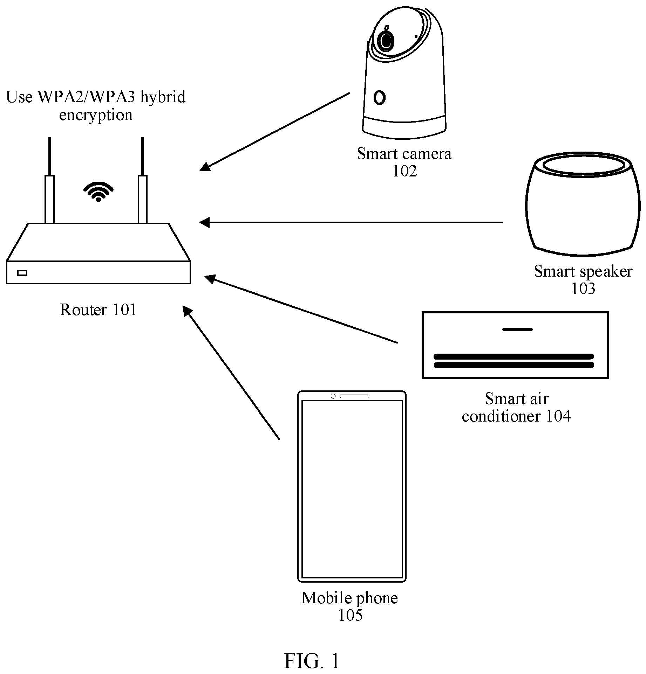

FIG. 1 is a schematic diagram of an architecture of a communication system 10 according to an embodiment of this application.

As shown in FIG. 1, the communication system 10 may include a router 101, a smart camera 102, a smart speaker 103, a smart air conditioner 104, and a mobile phone 105.

The router 101 may be referred to as an access point device in the communication system 10. The smart camera 102, the smart speaker 103, the smart air conditioner 104, and the mobile phone 105 may be referred to as station devices in the communication system 10. The router 101, the smart camera 102, the smart speaker 103, the smart air conditioner 104, and the mobile phone 105 may all be referred to as electronic devices. The smart camera 102, the smart speaker 103, and the smart air conditioner 104 may be referred to as smart homes. The smart home is an appliance that can be connected to a local area network and exchange data over the local area network.

The router 101 may connect the smart camera 102, the smart speaker 103, the smart air conditioner 104, and the mobile phone 105 that are connected to the router 101 to the local area network. In this way, the mobile phone 105 may receive a user operation and send a control instruction to the smart camera 102, the smart speaker 103, or the smart air conditioner 104 in response to the user operation, to instruct the smart camera 102, the smart speaker 103, or the smart air conditioner 104 to perform a corresponding action. For example, the mobile phone 105 may receive a user operation and send a control instruction A to the smart air conditioner 104 in response to the user operation, and the control instruction A instructs the smart air conditioner 104 to start. The smart air conditioner 104 may receive the control instruction A and switches from an off state to an on state in response to the control instruction A. Alternatively, the mobile phone 105 may receive a user operation and send a control instruction B to the smart camera 102 in response to the user operation, and the control instruction B instructs the smart camera 102 to send data of a captured video to the mobile phone 105. In this way, the mobile phone 105 may receive the data of the video sent by the smart camera 102, to view a real-time video captured by the smart camera 102.

Because manufacturers of some smart homes do not conform to a specification when writing code, these smart homes are caused to mistakenly advertise, in a packet, a wireless encryption manner that the smart homes do not support when establishing a connection to a router. Consequently, the smart homes cannot be normally connected to the router, affecting use of a user. For example, when the router 101 uses a WPA2/WPA3 hybrid encryption mode, if the smart air conditioner 104 without a WPA3 capability advertises support for WPA3, the smart air conditioner may not be connected to the local area network by using the router 101. In this way, the user cannot control the smart air conditioner 104 by using the mobile phone 105, affecting experience when the user uses the smart air conditioner.

To resolve the foregoing problem, embodiments of this application provide a network connection method, an electronic device, and a computer-readable storage medium. In the method, when an access point device determines that a to-be-connected station device advertises, in a packet, support for WPA3, and the station device actually cannot establish a connection to the access point device by using methods such as link authentication, access authentication, and data encryption that are required in WPA3, the access point device may establish a connection to the station device by using WPA2, to ensure that the station device can be normally connected to the local area network. This prevents the station device from being unable to normally connect to the access point device that uses a WPA2/WPA3 hybrid encryption mode caused by the station device mistakenly adverting a wireless encryption manner that is not supported, thereby preventing the user from being unable to use the site device normally. The user does not need to perform configuration modification and another operation on an access point device or a station device of the foregoing type, and the access point device and the station device may successfully establish a connection, thereby improving experience when the user uses the station device and the access point device. In embodiments of this application, that the station device establishes a connection to the access point device by using WPA2 actually means that the station device is connected to the access point device by using a link authentication method, an access authentication method, a data encryption method, and the like specified in WPA2. That the station device establishes a connection to the access point device by using WPA3 actually means that the station device is connected to the access point device by using a link authentication method, an access authentication method, a data encryption method, and the like specified in WPA3.

A procedure in which a station device establishes a normal connection to an access point device is first described herein with reference to the IEEE 802.11 standard.

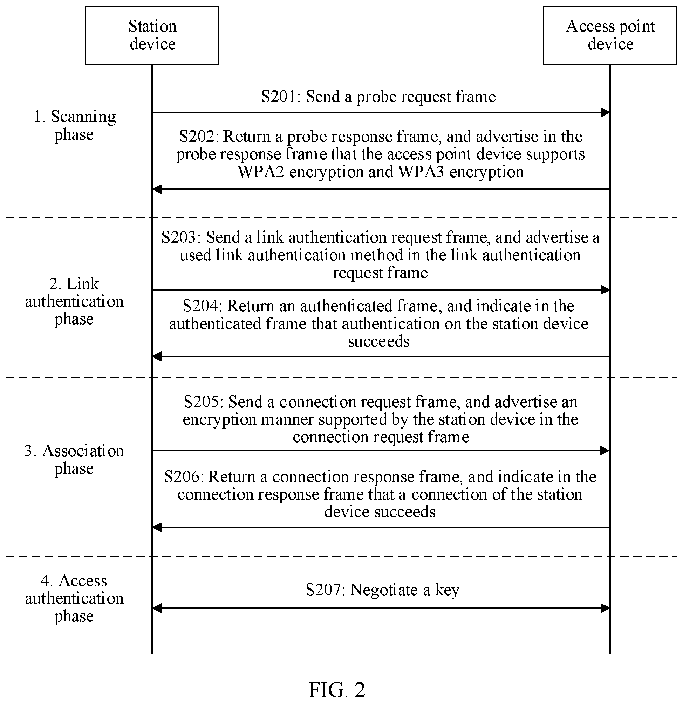

FIG. 2 is a schematic diagram of a procedure in which a connection is established between a station device and an access point device for the first time according to an embodiment of this application. As shown in FIG. 2, the station device and the access point device need to undergo the following several phases to establish a connection for the first time.

### 1. Scanning (scanning) phase

The scanning phase is for probing and discovering a peer device. The scanning phase may include but is not limited to the following steps.

S201: The station device sends a probe request frame to the access point device.

S202: The access point device returns a probe response frame to the station device, and advertises in the probe response frame that the access point device supports WPA2 encryption and WPA3 encryption.

Scanning may include active scanning and passive scanning. S201 and S202 are an active probe process of the station device. During the active scanning, on each channel, the station device actively sends a probe request (Probe Request) frame to request the access point device to respond. The probe request frame carries a media access control address (media access control address, MAC) of the station device. When receiving the probe request frame sent by the station device, the access point device returns a probe response (Probe Response) frame to the station device for replying.

During the passive scanning (not shown in FIG. 2), the station device switches between channels in a channel list and waits for a beacon (Beacon) frame sent by the access point device.

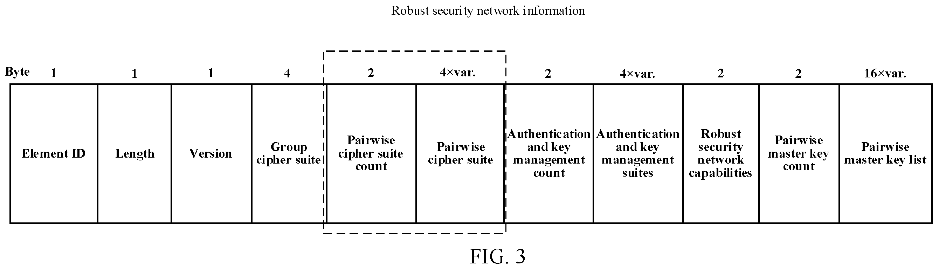

The Beacon frame and the Probe Response frame may carry robust security network (Robust Security Network, RSN) information, and the RSN information is used for identifying information related to network security. As shown in FIG. 3, the RSN information may include an element ID (Element ID) field, a length (Length) field, a version (Version) field, a group cipher suite (Group cipher Suite) field, a pairwise cipher suite count (Pairwise cipher Suite count) field, a pairwise cipher suite (Pairwise cipher Suite) field, an authentication and key management count (authentication and key management count, AKM count) field, an authentication and key management suites (authentication and key management suites, AKM suites) field, an RSN capabilities (RSN Capabilities) field, a pairwise master key count (pairwise master key count, PMK count) field, and a PMK list (pairwise master key list, PMK list) field.

The AKM count field may indicate a quantity of access authentication manners supported by the network, and the AKM suites field may include a quantity of OUIs corresponding to the access authentication manners, where the OUI is used for identifying an access authentication manner. The station device and the access point device may determine an access authentication manner of the network based on an OUI field and a type number. The access authentication manner herein may include pre-shared key (pre-shared key, PSK) encryption and simultaneous authentication of equals (simultaneous authentication of equals, SAE) encryption. The PSK encryption is an access authentication manner included in WPA2, and the SAE encryption is an access authentication manner included in WPA3. Optionally, an OUI of the PSK encryption may be 00-0F-AC-02, and an OUI of the SAE encryption may be 00-0F-AC-08.

When the access point device uses a WPA2/WPA3 hybrid encryption mode, the access point device may advertise, in the probe response frame, support for both the WPA2 encryption and the WPA3 encryption. The access point device may advertise, by using the AKM count field and the AKM suites field, support for both the WPA2 encryption and the WPA3 encryption. For example, the access point device may set the AKM count field to 2 in the probe response frame. This indicates that the access point device supports two access authentication manners in total. The access point device may fill the AKM suites field with OUIs of the two access authentication manners supported by the access point device. The AKM suites field may include an OUI of the PSK encryption and an OUI of the SAE encryption.

### 2. Link authentication (Authentication) phase

The link authentication phase is for verifying whether an identity of the access point device is secure. The link authentication phase may include but is not limited to the following steps.

S203: The station device sends a link authentication request frame to the access point device, and advertises a used link authentication method in the link authentication request frame.

S204: The access point device returns an authenticated frame to the station device, and indicates in the authenticated frame that authentication on the station device succeeds.

After receiving a probe response frame sent by the access point device, the station device needs to be authenticated by the access point device. The station device may send a link authentication request (Authentication Request) frame to the access point device, where the link authentication request frame may include a link authentication method selected by the station device.

The link authentication method may include open system authentication (open system authentication) and SAE authentication. In addition to the open system authentication and the SAE authentication, the link authentication request frame may further include shared key authentication (shared key authentication). For introduction of the shared key authentication, refer to a definition of the IEEE802.11 standard. Details are not described in embodiments of this application.

When the station device selects WPA2 to connect to the access point device, the station device may select the open system authentication as a link authentication method to establish a connection to the access point device. When the station device selects the open system authentication, the access point device returns an authenticated frame to the station device, and indicates in the authenticated frame for the station device that link authentication on the station device succeeds.

When the station device selects WPA3 to connect to the access point device, the station device may advertise that the SAE authentication is used. When the station device selects the SAE authentication, the station device and the access point device negotiate with each other based on a password (that is, a PSK) of the network connection, and separately generate a pairwise master key (pairwise master key, PMK). Then, the station device and the access point device may verify whether a PMK computed by the peer device is consistent with a PMK computed by the station device or the access point device. The authentication on the station device can succeed only when the PMKs computed by the station device and the access point device are consistent. Further, the access point device may return an authenticated frame to the station device to indicate that the authentication on the station device succeeds. When the PMKs computed by the station device and the access point device are inconsistent, the access point device notifies the station device that authentication fails. Checking the PMKs herein is actually to check PSKs. The PMKs of the access point device and the station device are generated based on PSKs of the access point device and the station device. When the PMKs generated by the access point device and the station device are consistent, it may indicate that the PSKs of the access point device and the station device are consistent, and this further indicates that the PSKs used by the station device are correct. The PSK obtained by the station device may be entered by a user. When the PMKs are computed by the station device and the access point device, the station device and the access point device may further obtain a pairwise master key identifier (pairwise master key identifier, PMKID). The PMKID may be used for establishing, by the station device, a fast connection to the access point device when the connection is a non-first connection. In embodiments of this application, the PMKID may also be referred to as a fast connection key.

To be specific, when the station device selects the open system authentication, the station device and the access point device do not need to verify the PSKs in the link authentication phase, and the access point device returns an authenticated frame to the station device to indicate that authentication on the station device succeeds. However, when the station device selects the SAE authentication, the station device and the access point device may verify the PSKs in the link authentication phase. The access point device returns, to the station device, the authenticated frame indicating that the authentication on the station device succeeds only after verification on the PSK of the station by the access point device succeeds.

### 3. Association (Association) phase

The association phase is for establishing an association between the station device and the access point device, and the station device can establish an association with only one access point device at a same time. Establishing an association between the station device and the access point device means that the station device joins a network in which the access point device is located.

The association phase may also be referred to as a connection phase. The association phase may include but is not limited to the following steps.

S205: The station device sends a connection request frame to the access point device, and advertises an encryption manner supported by the station device in the connection request frame.

S206: The access point device returns a connection response frame to the station device, and indicates in the connection response frame that a connection of the station device succeeds.

In the association phase, the station device and the access point device negotiate some parameters of a network service. For example, the station device and the access point device may negotiate a listen interval (listen interval), to further determine how frequently the station device listens to a Beacon frame. Alternatively, the station device and the access point device may further determine whether encryption capabilities of the station device and the access point device match each other.

The station device sends a connection request (Association Request) frame to the access point device, where the connection request frame carries robust security network information. An AKM count field and an AKM suites field in the robust security network information may indicate an access authentication manner that the station device can support. The station device may fill the AKM suites field with an OUI of a PSK, and this may indicate that the station device supports use of the WPA2 encryption.

After receiving the connection request frame, the access point device may determine whether a capability of the station device matches that of the access point device. For example, the access point device may determine, based on an AKM suites field in the connection request frame, that the station device supports the WPA2 encryption, and the access point device can also support the WPA2 encryption. This indicates that encryption capabilities of the station device and the access point device match each other.

When selecting WPA2 to connect to the access point device, the station device may advertise support for the PSK encryption in the connection request frame.

When selecting WPA3 to connect to the access point device, the station device advertises support for the SAE encryption in the connection request frame. Because in WPA3, the station device and the access point device are required to encrypt a management frame, when the station device is connected to the access point device by using the WPA3 encryption, the station device needs to configure, in the connection request frame, a field supporting a protected management frame, to indicate that the station device has a protected management frame capability. An RSN Capabilities field in the connection request frame may include a management frame protection capable (management frame protection capable, MFPC) field and a management frame protection required (management frame protection required, MFPR) field. When the MFPC field is set to 1, it indicates that the device supports a protected management frame (protected management frame, PMF). When the MFPR field is set to 1, it indicates that the peer device needs to support the PMF. The foregoing field supporting a protected management frame may be the MFPC field that is set to 1.

The access point device may send a connection response (Association Response) frame to the station device, and indicate, in the connection response frame, that an association (that is, a connection) between the station device and the access point device succeeds. The station device and the access point device further need to complete key negotiation in an access authentication phase, so that the station device can join a local area network in which the access point device is located and communicate with another station device in the local area network.

### 4. Access authentication phase

The access authentication phase is for negotiating a key. In this way, during subsequent communication between the access point device and the station device, the access point device and the station device may encrypt a packet by using the negotiated key, thereby ensuring security of data transmission.

The access authentication phase may include the following steps.

S207: The station device negotiates a key with the access point device.

In the access authentication phase, key negotiation may be performed between the station device and the access point device to generate one or more keys, and the one or more keys are used for encrypting a subsequent packet.

When the station device selects WPA2 to connect to the access point device, the station device and the access point device may perform negotiation based on a password (that is, a PSK) of the network connection, and separately generate a pairwise transient key (pairwise transient key, PTK). Then, the station device and the access point device may verify whether a PTK computed by the peer device is consistent with a PTK computed by the station device or the access point device.

When the station device selects WPA3 to connect to the access point device, the station device and the access point device may perform negotiation based on the PMKs generated in the link authentication phase, and separately generate a PTK. Further, the station device and the access point device may determine whether the PTK generated by the station device or the access point device is consistent with the PTK generated by a peer device. When the PTKs generated by the station device and the access point device are consistent, it indicates that the PMKs of the station device and the access point device are consistent.

In addition to the PTK, the station device and the access point device may further negotiate a group temporary key (group temporal key, GTK). The PTK is used for encrypting a unicast packet, and the GTK is used for encrypting multicast and broadcast packets.

The station device and the access point device may generate the PTK and the GTK after performing an extensible authentication protocol over the local area network (extensible authentication protocol over LAN, EAPOL) four-way handshake. When establishing a connection by using WPA2, the station device and the access point device perform the EAPOL four-way handshake by using the PSK to generate a key; and when establishing a connection by using WPA3, the station device and the access point device perform the EAPOL four-way handshake by using the PMK to generate a key.

After the station device and the access point device perform authentication by using the WPA3 encryption for the first time, the station device and the access point device may store, within preset time, a PMKID generated through negotiation by the access point device and the station device and a PMK corresponding to the PMKID. When the station device is connected to the access point device again, the station device may send the PMKID to the access point device for authentication. If verification on the PMKID of the station device succeeds, the station devices and the access point device do not need to negotiate with each other again to generate a PMK, but directly use the existing PMK to perform the EAPOL four-way handshake to generate the PTK and the GTK in the access authentication phase. The foregoing process may be referred to as a fast connection of the WPA3 encryption.

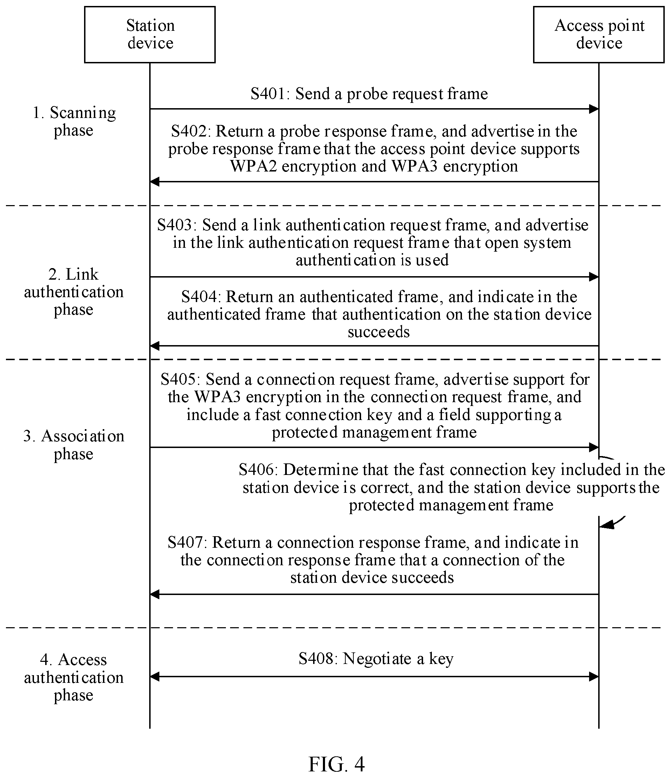

FIG. 4 is a schematic diagram of a procedure in which a fast connection is performed between a station device and an access point device according to an embodiment of this application.

As shown in FIG. 4, the station device and the access point device need to undergo the following several phases to perform the fast connection.

### 1. Scanning (scanning) phase

The scanning phase may include but is not limited to the following steps.

S401: The station device sends a probe request frame to the access point device.

S402: The access point device returns a probe response frame to the station device, and advertises in the probe response frame that the access point device supports WPA2 encryption and WPA3 encryption.

### 2. Link authentication (Authentication) phase

The link authentication phase may include but is not limited to the following steps.

S403: The station device sends a link authentication request frame to the access point device, and advertises, in the link authentication request frame, that open system authentication is used.

S404: The access point device returns an authenticated frame to the station device, and indicates in the authenticated frame that authentication on the station device succeeds.

### 3. Association (Association) phase

The association phase may include but is not limited to the following steps.

S405: The station device sends a connection request frame to the access point device, advertises support for the WPA3 encryption in the connection request frame, and includes a fast connection key and a field supporting a protected management frame.

S406: The access point device determines that the fast connection key included in the station device is correct, and the station device supports the protected management frame.

S407: The access point device returns a connection response frame to the station device, and indicates in the connection response frame that a connection of the station device succeeds.

When the station device and the access point device use the open system authentication, if the station device advertises support for SAE encryption, the access point device may perform identity authentication on the station device by using a fast connection of WPA3. The access point device verifies whether the station device includes the fast connection key (that is, a PMKID), and whether the access point device stores a PMK corresponding to the PMKID. The PMKID and the PMK may be determined when the station device and the access point device establish a connection for the first time.

In addition, the access point device may further determine whether the station device supports a protected management frame. When the access point device and the station device use the fast connection of WPA3, the connection request frame needs to carry the field supporting a protected management frame. The foregoing field supporting a protected management frame may be an MFPC field that is set to 1.

After the access point device determines that the fast connection key included in the station device is correct, and the station device supports the protected management frame, the station device and the access point device do not need to renegotiate with each other to generate a PMK. The access point device may send a connection response frame to the station device, and indicates in the connection response frame that a connection of the station device succeeds.

When the station device includes no fast connection key, or the fast connection key is incorrect, the access point device may indicate, in the connection response frame, that a connection of the station device fails, and the station device and the access point device are disconnected.

### 4. Access authentication phase

The access authentication phase may include the following steps.

S408: The station device negotiates a key with the access point device.

The station device and the access point device may perform an EAPOL four-way handshake by using the PMK obtained in step S406, to generate a PTK and a GTK. Subsequently, the station device and the access point device may encrypt a packet by using the foregoing keys when performing communication with each other.

Currently, implementation code of some station devices (for example, smart homes) does not conform to a specification, and the station devices do not have a WPA3 encryption capability, but advertise, in a packet, support for the WPA3 encryption. When the access point device uses a WPA2-only encryption mode (where the access point device advertises support for only the WPA2 encryption in the WPA2-only encryption mode), such station devices can successfully establish a connection to the access point device. When the access point device uses a WPA2/WPA3 hybrid encryption mode (where the access point device advertises support for both the WPA2 encryption and WPA3 encryption in the WPA2/WPA3 hybrid encryption mode), a problem that implementation code of such station devices does not conform to the specification is revealed, so that such station devices cannot establish a connection to the access point device normally.

The following describes several scenarios in which the station device fails to connect to the access point device and a network connection method for each scenario according to an embodiment of this application.

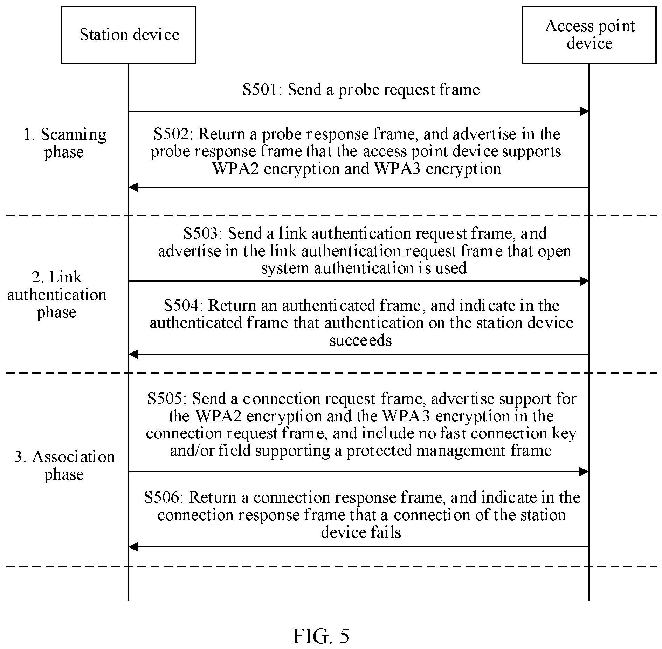

FIG. 5 is a diagram of a procedure in which a station device fails to connect to an access point device according to an embodiment of this application. As shown in FIG. 5, a procedure of connecting the station device to the access point device includes the following steps in total.

### 1. Scanning phase

The scanning phase may include the following steps.

S501: The station device sends a probe request frame to the access point device.

S502: The access point device returns a probe response frame to the station device, and advertises in the probe response frame that the access point device supports WPA2 encryption and WPA3 encryption.

For descriptions of the scanning phase, refer to the foregoing descriptions. Details are not described herein again.

### 2. Link authentication phase

The link authentication phase may include the following steps.

S503: The station device sends a link authentication request frame to the access point device, and advertises, in the link authentication request frame, that open system authentication is used.

S504: The access point device returns an authenticated frame to the station device, and indicates in the authenticated frame that authentication on the station device succeeds.

For descriptions of the link authentication phase, refer to the foregoing descriptions. Details are not described herein again.

### 3. Association phase

The association phase may include the following steps.

S505: The station device sends a connection request frame to the access point device, advertises support for the WPA2 encryption and the WPA3 encryption in the connection request frame, and includes no fast connection key and/or field supporting a protected management frame.

S506: The access point device returns a connection response frame to the station device, and indicates in the connection response frame that a connection of the station device fails.

The access point device is in a WPA2/WPA3 hybrid encryption mode, and the station device indicates, by filling an AKM suites field with an OUI of PSK encryption and an OUI of SAE encryption, that the station device supports both the WPA2 encryption and the WPA3 encryption.

Because the station device advertises support for both the WPA2 encryption and the WPA3 encryption in the connection request frame, the access point device preferentially selects the WPA3 encryption as an encryption manner for this connection. However, in step S503, the station device advertises, in the link authentication request frame sent to the access point device, that the open system authentication is used, so that the access point device selects a fast connection of WPA3 as an encryption manner for this time.

The access point device verifies whether the station device has a fast connection key (that is, a PMKID). If the station device does not include the fast connection key, the fast connection cannot be performed, so that the access point device returns a connection response frame to the station device, and indicates in the connection response frame that a connection of the station device fails.

Because a WPA3 network needs to support a protected management frame, the access point device further verifies whether the station device supports the protected management frame. The access point device may determine, based on an MFPC field and an MFPR field in an RSN capabilities field, whether the station device supports the protected management frame. Similarly, when the station device does not support the protected management frame, the connection fails.

As shown in FIG. 5, when using the WPA3 encryption, the station device enters a fast connection procedure of WPA3, resulting in an access failure. However, the station device may normally establish a connection to the access point device by using the WPA2 encryption. In some embodiments, when the station device fails in a fast connection procedure by using WPA3, the access point device may guide the station device to establish a connection by using the WPA2 encryption.

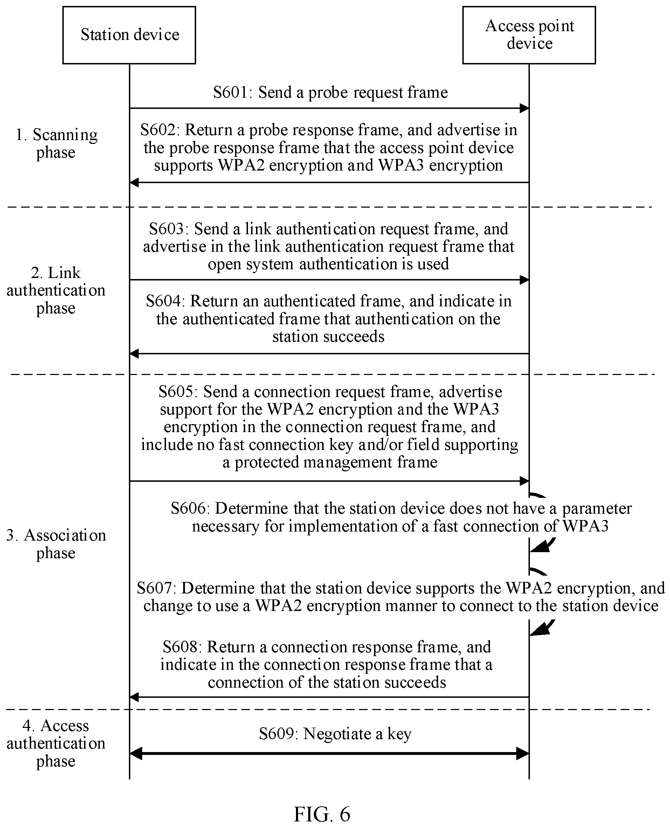

FIG. 6 is a diagram of a procedure in which an access point device guides a station device to establish a connection by using WPA2 encryption according to an embodiment of this application. As shown in FIG. 6, a procedure in which the access point device guides the station device to establish a connection by using WPA2 may include but is not limited to the following steps.

### 1. Scanning phase

The scanning phase may include the following steps.

S601: The station device sends a probe request frame to the access point device.

S602: The access point device returns a probe response frame to the station device, and advertises in the probe response frame that the access point device supports WPA2 encryption and WPA3 encryption.

### 2. Link authentication phase

The link authentication phase may include the following steps.

S603: The station device sends a link authentication request frame to the access point device, and advertises, in the link authentication request frame, that open system authentication is used.

S604: The access point device returns an authenticated frame to the station device, and indicates in the authenticated frame that authentication on the station succeeds.

### 3. Association phase

The association phase may include the following steps.

S605: The station device sends a connection request frame to the access point device, advertises support for the WPA2 encryption and the WPA3 encryption in the connection request frame, and includes no fast connection key and/or field supporting a protected management frame.

S606: The access point device determines that the station device does not have a parameter necessary for implementation of a fast connection of WPA3.

S607: The access point device determines that the station device supports the WPA2 encryption, and changes to use a WPA2 encryption manner to connect to the station device.

S608: The access point device returns a connection response frame to the station device, and indicates in the connection response frame that a connection of the station succeeds.

When the station device selects the open system authentication, if the access point device determines, after receiving the connection request frame, that the station device does not include the parameter necessary for the fast connection of WPA3, the access point device may determine whether the station device further supports the WPA2 encryption. When determining that the access point device supports the WPA2 encryption, the access point device may change to use a procedure of the WPA2 encryption to establish a connection to the station device.

The parameter necessary for the fast connection of WPA3 includes a field supporting a protected management frame and PMKIDs generated by the station device and the access point device within a past period of time. The field supporting a protected management frame may be the MFPC field and the MFPR field that are set to 1. In addition, the access point device may determine, depending on whether an OUI of a PSK exists in the AKM suites in the RSN information, whether the station device supports the WPA2 encryption.

In some embodiments, after the access point device determines that the station device selects the fast connection of the WPA3 encryption to establish a connection to the access point device, but does not have the parameter necessary for the fast connection of WPA3, the access point device may further add a MAC address of the station device to an encryption degradation list. In this way, after obtaining the MAC address of the station device in the scanning phase through active scanning or passive scanning, the access point device may first determine whether the MAC address exists in the encryption degradation list. If the MAC address of the station device is in the encryption degradation list, the access point device may establish a connection to the station device through a procedure of the WPA2 encryption. Optionally, when duration for which the MAC address of the station device is stored in the encryption degradation list exceeds preset duration, the access point device may remove the MAC address of the station device from the encryption degradation list.

### 4. Access authentication phase

The access authentication phase may include the following steps.

S609: The access point device negotiates a key with the station device.

The access point device may perform an EAPOL four-way handshake with the station device to verity the PSK of the station device, so as to generate a PTK and a GTK. It should be noted that the access point device and the station device herein may negotiate, according to an EAPOL four-way handshake procedure through the WPA2 encryption, with each other to generate a key, and the access point device and the station device generate a PTK and a GTK based on the PSK. When the access point device and the station device use the WPA3 encryption, the access point device and the station device verify the PSK and then generate a PMK in the link authentication phase, and then generate a PTK and a GTK based on the PMK in the access authentication phase for subsequent data transmission.

In other words, when the station device intends to negotiate a key by using WPA2, but selects the open system authentication, if the station device advertises support for both the WPA2 encryption and the WPA3 encryption, the access point device is caused to authenticate the station device by using the fast connection of WPA3. When determining that the station device does not have the parameter necessary for the fast connection of WPA3, the access point device may establish a connection to the station device by using WPA2. In this way, it can be ensured that such station device that wants to use the WPA2 encryption but mistakenly enters a fast connection procedure of WPA3 can successfully establish a connection to the access point device, thereby improving use experience of a user.

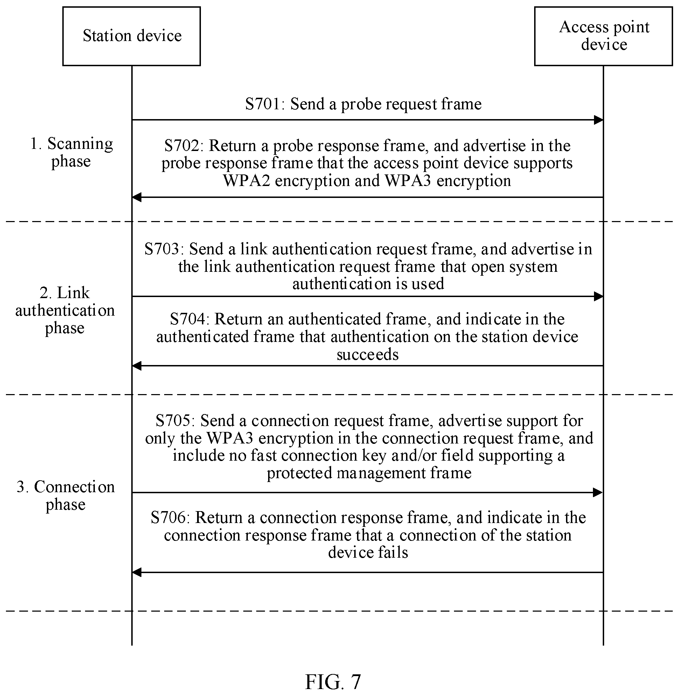

FIG. 7 is another diagram of a procedure in which a station device fails to connect to an access point device according to an embodiment of this application.

As shown in FIG. 7, a procedure of connecting the station device and the access point device includes the following steps in total.

### 1. Scanning phase

The scanning phase may include the following steps.

S701: The station device sends a probe request frame to the access point device.

S702: The access point device returns a probe response frame to the station device, and advertises in the probe response frame that the access point device supports WPA2 encryption and WPA3 encryption.

### 2. Link authentication phase

The link authentication phase may include the following steps.

S703: The station device sends a link authentication request frame to the access point device, and advertises, in the link authentication request frame, that open system authentication is used.

S704: The access point device returns an authenticated frame to the station device, and indicates in the authenticated frame that authentication on the station device succeeds.

### 3. Association phase

The association phase may include the following steps.

S705: The station device sends a connection request frame to the access point device, advertises support for the WPA3 encryption in the connection request frame, and includes no fast connection key and/or field supporting a protected management frame.

S706: The access point device returns a connection response frame to the station device, and indicates in the connection response frame that a connection of the station device fails.

The access point device is in a WPA2/WPA3 hybrid encryption mode. The station device indicates, by only an OUI of an SAE encryption in an AKM suites field in RSN information, that the station device supports only the WPA3 encryption.

Different from the situation shown in FIG. 5 in which the station device fails to connect to the access point device, the station device advertises support for only the WPA3 encryption and not support the WPA2 encryption in the connection request frame. When performing identity authentication with the station device by using the fast connection of WPA3, the access point device cannot successfully establish a connection. However, when the access point device uses only the WPA2 encryption, such station device may perform, by using WPA2, identity authentication with the access point device to establish a network connection. This may be because such station device advertises support for encryption based on an encryption capability of the access point device. When the access point device advertises support for the WPA3 encryption, such station device advertises support for only the WPA3 encryption. When the access point device advertises support for only the WPA2 encryption, such station device advertises support for the WPA2 encryption.

For the problem shown in FIG. 7 that the station device fails to connect to the access point device, in some embodiments, when the station device advertises support for only the WPA3 encryption but fails to complete a fast connection procedure of WPA3, the access point device may guide the station device to perform identity authentication by using the WPA2 encryption.

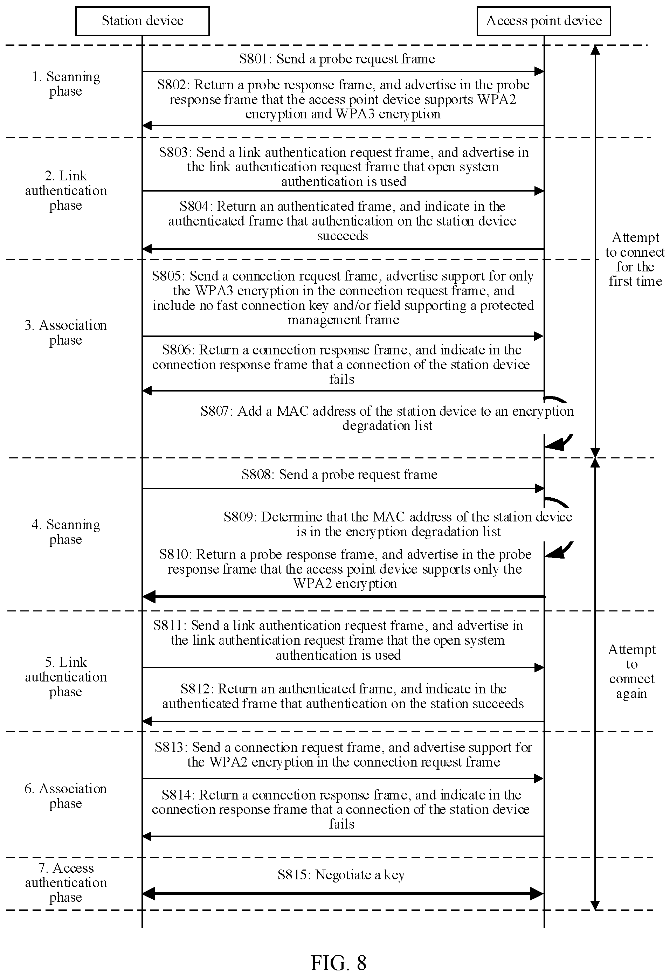

FIG. 8 is another diagram of a procedure in which an access point device guides a station device to establish a connection by using WPA2 according to an embodiment of this application. As shown in FIG. 8, a procedure in which the access point device guides the station device to establish a connection by using WPA2 encryption may include but is not limited to the following steps.

### 1. Scanning phase

The scanning phase may include the following steps.

S801: The station device sends a probe request frame to the access point device.

S802: The access point device returns a probe response frame to the station device, and advertises in the probe response frame that the access point device supports the WPA2 encryption and WPA3 encryption.

### 2. Link authentication phase

The link authentication phase may include the following steps.

S803: The station device sends a link authentication request frame to the access point device, and advertises, in the link authentication request frame, that open system authentication is used.

S804: The access point device returns an authenticated frame to the station device, and indicates in the authenticated frame that authentication on the station succeeds.

### 3. Association phase

The association phase may include the following steps.

S805: The station device sends a connection request frame to the access point device, advertises support for the WPA2 encryption and the WPA3 encryption in the connection request frame, and includes no fast connection key and/or field supporting a protected management frame.

S806: The access point device returns a connection response frame to the station device, and indicates in the connection response frame that a connection of the station device fails.

S801 to S806 are a procedure in which the station device accesses, for the first time, a network in which the access point device is located. For descriptions of S801 to S806, refer to the descriptions of S701 to S706. Details are not described herein again.

S807: The access point device adds a MAC address of the station device to an encryption degradation list.

In some embodiments, when the station device and the access point device use the open system authentication as a link authentication method for the station device and the access point device, if the station device advertises support for only the WPA3 encryption, and includes no parameter necessary for a fast connection of WPA3, the access point device may add the MAC address of the station device to the encryption degradation list. The encryption degradation list may include one or more MAC addresses of station devices that use the open system authentication, advertise support for the WPA3 encryption, and includes no parameter necessary for the fast connection of WPA3.

A procedure in which the station device attempts again to connect to the network in which the access point device is located may include the following steps.

### 4. Scanning phase

The scanning phase may include the following steps.

S808: The station device sends a probe request frame to the access point device.

S809: The access point device determines that the MAC address of the station device is in the encryption degradation list.

S810: The access point device returns a probe response frame to the station device, and advertises, in the probe response frame, that the access point device supports only the WPA2 encryption.

After receiving the probe request frame of the station device, the access point device may first query whether the MAC address of the station device is in the encryption degradation list. When determining that the MAC address of the station device exists in the encryption degradation list, the access point device may advertise support for only the WPA2 encryption in the probe response frame.

It should be noted that the access point device advertises, only when determining that the MAC address of the station device is in the encryption degradation list, support for only the WPA2 encryption in the probe response frame. For a station device whose MAC address is not in the encryption degradation list, the access point device still advertises support for both the WPA2 encryption and the WPA3 encryption. In this way, the access point device can establish, by preferentially using the WPA3 encryption, a connection to a station device having a WPA3 encryption capability, so that security is improved.

### 5. Link authentication phase

The link authentication phase may include the following steps.

S811: The station device sends a link authentication request frame to the access point device, and advertises, in the link authentication request frame, that open system authentication is used.

S812: The access point device returns an authenticated frame to the station device, and indicates in the authenticated frame that authentication on the station device succeeds.

### 6. Association phase

The association phase may include the following steps.

S813: The station device sends a connection request frame to the access point device, and advertises support for the WPA2 encryption in the connection request frame.

S814: The access point device returns a connection response frame to the station device, and indicates in the connection response frame that a connection of the station device succeeds.

### 7. Access authentication phase

The access authentication phase may include the following steps.

S815: The station device negotiates a key with the access point device.

The station device may negotiate a key with the access point device in a WPA2 encrypted pre-shared key (pre-shared key, PSK) encryption manner. For example, the station device and the access point device may perform an EAPOL four-way handshake based on a PSK, to generate a PTK and a GTK. The station device and the access point device may perform, based on an actual used encryption manner (that is, the WPA2 encryption), corresponding adaptation on a packet when performing the EAPOL four-way handshake. For example, when performing the EAPOL four-way handshake, the access point device may indicate that the access point device is a device supporting only WPA2.

In other words, when the station device selects the open system authentication and advertises support for only the WPA3 encryption, if the access point device determines that the station device does not have a parameter necessary for the fast connection of the WPA3 encryption, the access point device may advertise, when the station device attempts a connection again, support for only the WPA2 encryption. In this way, some station devices that only have a WPA2 encryption capability and advertise also support for the WPA3 encryption because the access point device supports the WPA3 encryption may be guided by the access point device to perform access by using the WPA2 encryption, thereby ensuring that such station devices can be successfully connected to a local area network in which the access point device is located.

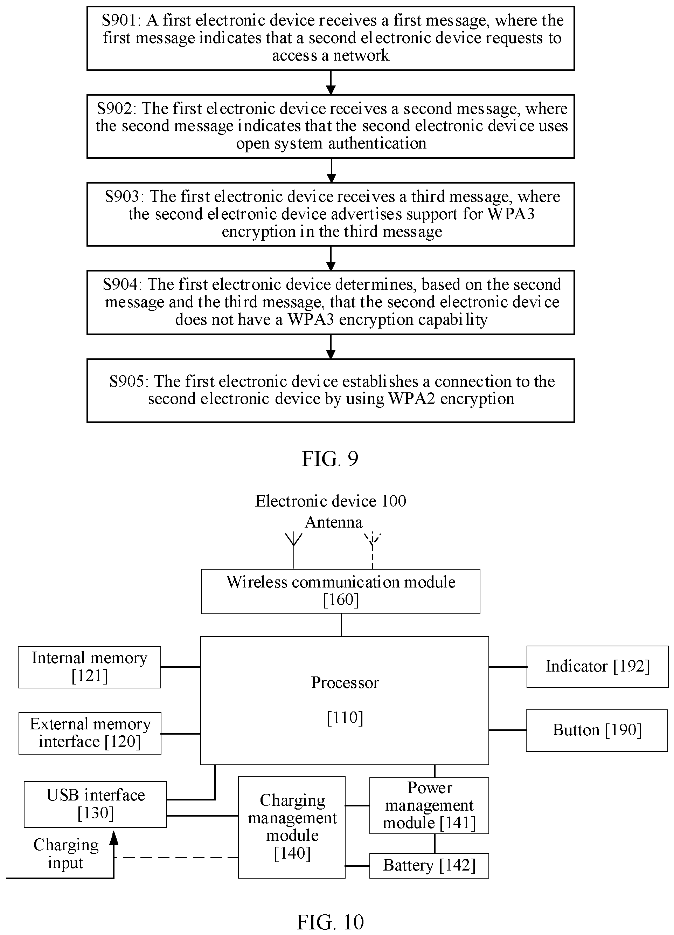

FIG. 9 is a flowchart of a network connection method according to an embodiment of this application.

As shown in FIG. 9, the network connection method may include but is not limited to the following steps.

S901: A first electronic device receives a first message, where the first message indicates that a second electronic device requests to access a network.

The first electronic device may be an access point device (for example, a router or a mobile phone that turns on a portable hotspot). The second electronic device may be a station device (for example, a smart home such as the smart camera 102, the smart speaker 103, and the smart air conditioner 104 shown in FIG. 1, or the mobile phone 105) that has a compatibility problem. The first electronic device may receive the first message sent by the second electronic device. The first message herein may be a probe request (Probe Request) frame sent by the station device to the access point device. The first electronic device uses a WPA2 and WPA3 hybrid encryption mode (which may be referred to as a WPA2/WPA3 hybrid encryption mode). When the first electronic device uses the WPA2 and WPA3 hybrid encryption mode, if the second electronic device advertises support for only WPA2 encryption, the first electronic device is connected to the second electronic device by using the WPA2 encryption; and if the second electronic device advertises support for the WPA3 encryption, the first electronic device is connected to the second electronic device by using the WPA3 encryption.

S902: The first electronic device receives a second message, where the second message indicates that the second electronic device uses open system authentication.

The first electronic device may receive the second message sent by the second electronic device. The second message may be a link authentication request (Authentication Request) frame sent by the second electronic device. The second electronic device may advertise, in the link authentication request frame, that open system authentication is used.

S903: The first electronic device receives a third message, where the second electronic device advertises support for the WPA3 encryption in the third message.

The first electronic device may receive the third message sent by the second electronic device. The third message may be a connection request (Association Request) frame sent by the second electronic device. The second electronic device may advertise support for SAE encryption in the third message, and the SAE encryption is an authentication manner included in the WPA3 encryption, indicating that the second electronic device advertises support for the WPA3 encryption.

S904: The first electronic device determines, based on the second message and the third message, that the second electronic device does not have a WPA3 encryption capability.

The first electronic device may determine, based on the second message, that the second electronic device uses the open system authentication. When the first electronic device and the second electronic device use the open system authentication, and the second electronic device advertises support for the SAE encryption, the first electronic device verifies whether the connection request frame carries a fast connection key (that is, a PMKID), and verifies whether the connection request frame includes a field supporting a protected management frame.

When the open system authentication is used and the second electronic device advertises support for SAE, if the first electronic device determines that the second electronic device does not include the fast connection key and/or the field supporting a protected management frame, the first electronic device may determine that the second electronic device does not have a capability of completing a fast connection of WPA3, in other words, does not have a WPA3 encryption capability.

S905: The first electronic device establishes a connection to the second electronic device by using the WPA2 encryption.

When determining that the second electronic device advertises support for the WPA3 encryption and does not have the WPA3 encryption capability, the first electronic device may change to use the WPA2 encryption to establish a connection to the second electronic device. In this way, the first electronic device can ensure that the second electronic device can be normally connected to the local area network by using WPA2 when the second electronic device cannot establish a connection by using the WPA3 encryption, thereby improving compatibility.

In some embodiments, before the first electronic device receives the second message, the method further includes: The first electronic device sends a fourth message to the second electronic device, where the fourth message indicates that the first electronic device supports the WPA2 encryption and the WPA3 encryption. The fourth message herein may be a probe response frame returned by the first electronic device to the second electronic device after the first electronic device receives the probe request frame. When the first electronic device uses the WPA2/WPA3 hybrid encryption mode, the first electronic device may indicate, in the probe response frame, that the first electronic device supports both PSK encryption and SAE encryption, in other words, the first electronic device supports both the WPA2 encryption and the WPA3 encryption. In this way, the second electronic device can select an encryption manner for use.

In some embodiments, the second electronic device further advertises support for the WPA2 encryption in the third message. With reference to the embodiment shown in FIG. 6, the second electronic device advertises support for both the WPA2 encryption and the WPA3 encryption in the third message (the connection request frame). In this way, when determining that the second electronic device does not have a WPA3 encryption capability, the first electronic device may change to use WPA2 to negotiate a key with the second electronic device. In this way, a station device that only has a WPA2 encryption capability and mistakenly advertises support for WPA3 can be guided, by the access point device, to use WPA2, so that the station device establishes a connection to the access point device by using WPA2, thereby ensuring that the station device with a problem can still be normally connected to the local area network, and avoiding affecting normal use of a user.

In some embodiments, the second electronic device does not advertise support for the WPA2 encryption in the third message, and before the first electronic device establishes a connection to the second electronic device by using the WPA2 encryption, the method further includes: The first electronic device sends a fifth message to the second electronic device, where the fifth message indicates that the second electronic device fails to connect to the network; and the first electronic device receives a sixth message, where the sixth message indicates that the second electronic device requests to access the network; the first electronic device sends a seventh message to the second electronic device, where the seventh message indicates that the first electronic device supports only the WPA2 encryption; and the first electronic device receives an eighth message, where the second electronic device advertises support for the WPA2 encryption in the eighth message. With reference to the embodiment shown in FIG. 8, the third message herein may be a connection request frame sent by the station device when the station device attempts to connect to the access point device for the first time. The station device may advertise support for only the WPA3 encryption in the connection request frame. Because the station device includes no parameter necessary to use WPA3, this connection fails. With reference to step S806, the access point device returns, to the station device, a connection response frame that indicates that a connection of the station device fails. The connection response frame herein may be referred to as the fifth message. The second electronic device may further attempt again to establish a connection to the access point device. With reference to step S808, the station device sends a probe request frame again to the access point device. The probe request frame herein may also be referred to as the sixth message. Further, the access point device may advertise support for only the WPA2 encryption in the seventh message, and may guide the station device to establish a connection to the access point device by using WPA2. The seventh message herein may be a probe response frame returned by the access point device to the station device when the station device attempts again to connect to the access point device (with reference to step S810). Further, the station device establishes a connection to the access point device by using WPA2. The station device may send the eighth message to the access point device, and advertise support for only the WPA2 encryption in the eighth message. The eighth message may be, for example, the connection request frame in step S813. In this way, such station device that only has a WPA2 encryption capability and also advertises support for WPA3 because the access point device advertises support for WPA3 may also be successfully connected to the local area network.

In some embodiments, after the first electronic device sends the fifth message to the second electronic device, the method further includes: The first electronic device stores a MAC address of the second electronic device into a first list, where the first list is used for storing a MAC address of an electronic device that advertises support for the WPA3 encryption and cannot be connected to a network by using the WPA3 encryption. After the first electronic device receives the sixth message, the method further includes: The first electronic device determines that the MAC address of the second electronic device is in the first list. In embodiments of this application, the first list may also be referred to as an encryption degradation list. It should be noted that the first list herein is not a list data structure. A data structure used for storing the MAC address of the electronic device is not limited in embodiments of this application. With reference to the embodiment shown in FIG. 8, when the open system authentication is used, if the second electronic device advertises support for the SAE encryption, and does not include a fast connection key and/or a field supporting a protected management frame, the first electronic device may add the MAC address of the second electronic device to the encryption degradation list (with reference to step S807). After the first electronic device receives again a probe request frame (the sixth message) for requesting to access by the second electronic device, the first electronic device may query whether the MAC address of the second electronic device exists in the encryption degradation list. Because the MAC address of the second electronic device is stored in the encryption degradation list, the first electronic device may advertise support for only the WPA2 encryption in the probe response frame, thereby guiding the second electronic device to establish a connection to the first electronic device by using WPA2.

In some embodiments, the method further includes: The first electronic device determines that duration for which the MAC address of the second electronic device is stored in the first list exceeds first duration; and the first electronic device deletes the MAC address of the second electronic device from the first list. In other words, the MAC address in the encryption degradation list cannot be stored for an indefinite period of time. After duration for which the MAC address of the second electronic device is stored in the encryption degradation list exceeds the preset first duration, the first electronic device may further delete the MAC address of the second electronic device from the encryption degradation list. In this way, it can be ensured that some station device that have a problem for only a short period of time can still establish a connection to the access point device by using WPA3.

In some embodiments, the method further includes: The first electronic device receives a ninth message, where the ninth message indicates that a third electronic device requests to access the network; the first electronic device receives a tenth message, where the tenth message indicates that the third electronic device uses the open system authentication; the first electronic device receives an eleventh message, where the third electronic device advertises support for the WPA3 encryption in the eleventh message; the first electronic device determines, based on the tenth message and the eleventh message, that the third electronic device has the WPA3 encryption capability; and the first electronic device establishes a connection to the third electronic device by using the WPA3 encryption. The third electronic device may be a station device (for example, a station device that can complete the fast connection procedure shown in FIG. 4) that has the WPA3 encryption capability. The first electronic device may receive the ninth message sent by the third electronic device, where the ninth message may, for example, be the probe request frame shown in FIG. 4. The first electronic device may further receive the tenth message indicating that the third electronic device selects the open system authentication, where the tenth message herein may, for example, be the link authentication request frame shown in FIG. 4. The third electronic device may further send the eleventh message to the first electronic device to advertise support for the WPA3 encryption, where the eleventh message may, for example, be the connection request frame shown in FIG. 4. Further, the first electronic device may determine that the connection request frame includes a field supporting a protected management frame and a fast connection key, in other words, the third electronic device has a WPA3 encryption capability. In this way, the first electronic device may establish a connection to the third electronic device by using a fast connection of WPA3, and the first electronic device and the third electronic device may negotiate, based on a PMK corresponding to a PMKID, with each other to generate a key in the access authentication phase.

The following describes an example electronic device 100 according to an embodiment of this application.

FIG. 10 is a schematic diagram of a structure of the electronic device 100 according to an embodiment of this application.

The following specifically describes the embodiment by using the electronic device 100 as an example. It should be understood that the electronic device 100 may have more or fewer components than those shown in FIG. 10, may combine two or a plurality of components, or may have a different component configuration. The components shown in FIG. 10 may be implemented by hardware, software, or a combination of hardware and software including one or more signal processing and/or application-specific integrated circuits.

The electronic device 100 may include a processor 110, an external memory interface 120, an internal memory 121, a universal serial bus (universal serial bus, USB) interface 130, a charging management module 140, a power management module 141, a battery 142, an antenna, a wireless communication module 160, a button 190, an indicator 192, and the like.

The processor 110 may include one or more processing units. For example, the processor 110 may include an application processor (application processor, AP), a modem processor, a controller, a memory, a digital signal processor (digital signal processor, DSP), a baseband processor, a neural-network processing unit (neural-network processing unit, NPU), and/or the like. Different processing units may be separate components, or may be integrated into one or more processors.

The controller may be a nerve center and a command center of the electronic device 100. The controller may generate an operation control signal based on instruction operation code and a timing signal, to complete control of instruction fetching and instruction execution.

A memory configured to store instructions and data may be further disposed in the processor 110. In some embodiments, the memory in the processor 110 is a cache. The memory may store instructions or data that is recently used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

The charging management module 140 is configured to receive charging input from a charger. The charger may be a wireless charger or a wired charger.

The power management module 141 is configured to connect the battery 142, the charging management module 140, and the processor 110. The power management module 141 receives input from the battery 142 and/or the charging management module 140, and supplies power to the processor 110, the internal memory 121, the external memory, the wireless communication module 160, and the like.

A wireless communication function of the electronic device 100 may be implemented by using the antenna, the communication module 160, the modem, the baseband processor, and the like.

The antenna may be configured to transmit and receive electromagnetic wave signals. An antenna in the electronic device 100 may be configured to cover one or more communication frequency bands. Different antennas may further be reused to improve antenna utilization. For example, the antenna may be multiplexed into a diversity antenna of a wireless local area network. In some other embodiments, the antenna may be used in combination with a tuning switch.

The wireless communication module 160 may provide a solution applied to the electronic device 100 for wireless communication including a wireless local area network (wireless local area network, WLAN) (for example, a wireless fidelity (wireless fidelity, Wi-Fi) network), and the like. The wireless communication module 160 may be one or more devices integrating at least one communication processing module. The wireless communication module 160 receives an electromagnetic wave through an antenna, performs frequency modulation and filtering on the electromagnetic wave signal, and sends the filtered signal to the processor 110. The wireless communication module 160 may further receive a to-be-sent signal from the processor 110, perform frequency modulation and amplification on the to-be-sent signal, and convert the to-be-sent signal into an electromagnetic wave for radiation through the antenna. In some embodiments, at least some functional modules of the wireless communication module 160 may be disposed in the processor 110. In some embodiments, at least some functional modules of the wireless communication module 160 and at least some modules of the processor 110 may be disposed in a same device.

In some embodiments, in the electronic device 100, the antenna is coupled to the wireless communication module 160, so that the electronic device 100 can communicate with a network and another device by using a wireless communication technology.

The external memory interface 120 may be configured to connect an external storage card such as a micro SD card, to expand a storage capability of the electronic device 100. The external storage card communicates with the processor 110 through the external memory interface 120, to implement a data storage function.

The internal memory 121 may be configured to store computer-executable program code, and the executable program code includes instructions. The processor 110 runs the instructions stored in the internal memory 121, to perform various functional applications and data processing of the electronic device 100. The internal memory 121 may include a program storage area and a data storage area. The program storage area may store an operating system, an application required by at least one function, and the like. The data storage area may store data and the like created when the electronic device 100 is used. In addition, the internal memory 121 may include a high-speed random access memory, and may further include a non-volatile memory, for example, at least one magnetic disk storage device, flash memory device, or a universal flash storage (universal flash storage, UFS). In some embodiments, the internal memory 121 may store an encryption degradation list.

The button 190 includes a power-on button, and the like. The button 190 may be a mechanical button or a touch key. The electronic device 100 may receive a button input, and generate a button signal input related to user settings and function control of the electronic device 100.

The indicator 192 may be an indicator light, and may be configured to indicate a charging status, or may be configured to indicate a network connection status.

It can be understood that a schematic structure in this embodiment of the present invention does not constitute a specific limitation on the electronic device 100. In some other embodiments of this application, the electronic device 100 may include more or fewer components than those shown in FIG. 10, or some components may be combined, or some components may be divided, or different component arrangements may be used. The components shown in FIG. 10 may be implemented by hardware, software, or a combination of software and hardware. The electronic device 100 may further include a display screen, a touch sensor, and the like.

In conclusion, the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some technical features thereof. These modifications and replacements do not cause the essence of the corresponding technical solutions to depart from the scope of the technical solutions of embodiments of this application.

The router 101, the smart camera 102, the smart speaker 103, the smart air conditioner 104, and the mobile phone 105 shown in FIG. 1 may all be referred to as electronic devices. In embodiments of this application, the first electronic device may also be referred to as the electronic device 100, and the first electronic device may be the router 101 shown in FIG. 1. For descriptions of a structure of another electronic devices, refer to descriptions of the electronic device 100. Details are not described herein again. In addition, the another electronic device may also include more or fewer components than those of the electronic device 100 shown in FIG. 10. This is not limited in embodiments of this application.

As used in the foregoing embodiments, based on the context, the term "when" may be interpreted as a meaning of "if", "after", "in response to determining", or "in response to detecting". Similarly, based on the context, the phrase "when it is determined" or "if (a stated condition or event) is detected" may be interpreted as a meaning of "if it is determined", "in response to determining", "when (a stated condition or event) is detected", or "in response to detecting (a stated condition or event)".

All or a part of the foregoing embodiments may be implemented by software, hardware, firmware, or any combination thereof. When the software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive), or the like.

A person of ordinary skill in the art may understand that all or some of the processes of the methods in embodiments may be implemented by a computer program instructing relevant hardware. The program may be stored in a computer-readable storage medium. When the program is executed, the processes of the foregoing method embodiments may be performed. The foregoing storage medium includes: any medium that can store program code, such as a ROM, a random access memory RAM, a magnetic disk, or an optical disc.

## Claims

1. A network connection method, wherein the method is applied to a first electronic device, the first electronic device is configured to provide a network access service, the first electronic device uses a WPA2 and WPA3 hybrid encryption mode, and the method comprises:
receiving, by the first electronic device, a first message, wherein the first message indicates that a second electronic device requests to access a network;
receiving, by the first electronic device, a second message, wherein the second message indicates that the second electronic device uses open system authentication;
receiving, by the first electronic device, a third message, wherein the second electronic device advertises support for WPA3 encryption in the third message;
determining, by the first electronic device based on the second message and the third message, that the second electronic device does not have a WPA3 encryption capability; and
establishing, by the first electronic device, a connection to the second electronic device by using WPA2 encryption.

2. The method according to claim 1, wherein the determining, by the first electronic device based on the second message and the third message, that the second electronic device does not have a WPA3 encryption capability comprises:
when determining, based on the second message, that the second electronic device uses the open system authentication, determining, by the first electronic device, that the third message does not carry a fast connection key and/or a field supporting a protected management frame.

3. The method according to claim 1 or 2, wherein before the receiving, by the first electronic device, a second message, the method further comprises: sending, by the first electronic device, a fourth message to the second electronic device, wherein the fourth message indicates that the first electronic device supports the WPA2 encryption and WPA3 encryption.

4. The method according to any one of claims 1 to 3, wherein the second electronic device further advertises support for the WPA2 encryption in the third message.

5. The method according to any one of claims 1 to 3, wherein the second electronic device does not advertise support for the WPA2 encryption in the third message, and before the establishing, by the first electronic device, a connection to the second electronic device by using WPA2 encryption, the method further comprises:
sending, by the first electronic device, a fifth message to the second electronic device, wherein the fifth message indicates that the second electronic device fails to connect to the network;
receiving, by the first electronic device, a sixth message, wherein the sixth message indicates that the second electronic device requests to access the network;
sending, by the first electronic device, a seventh message to the second electronic device, wherein the seventh message indicates that the first electronic device supports only the WPA2 encryption; and
receiving, by the first electronic device, an eighth message, wherein the second electronic device advertises support for the WPA2 encryption in the eighth message.

6. The method according to claim 5, wherein after the sending, by the first electronic device, a fifth message to the second electronic device, the method further comprises: storing, by the first electronic device, a MAC address of the second electronic device into a first list, wherein the first list is used for storing a MAC address of an electronic device that advertises support for the WPA3 encryption and that cannot be connected to the network by using the WPA3 encryption; and
after the receiving, by the first electronic device, a sixth message, the method further comprises: determining, by the first electronic device, that the MAC address of the second electronic device is in the first list.

7. The method according to claim 6, wherein the method further comprises:
determining, by the first electronic device, that duration for which the MAC address of the second electronic device is stored in the first list exceeds first duration; and
deleting, by the first electronic device, the MAC address of the second electronic device from the first list.

8. The method according to any one of claims 1 to 7, wherein the method further comprises: receiving, by the first electronic device, a ninth message, wherein the ninth message indicates a third electronic device requests to access the network;
receiving, by the first electronic device, a tenth message, wherein the tenth message indicates that the third electronic device uses the open system authentication;
receiving, by the first electronic device, an eleventh message, wherein the third electronic device advertises support for the WPA3 encryption in the eleventh message;
determining, by the first electronic device based on the tenth message and the eleventh message, that the third electronic device has the WPA3 encryption capability; and
establishing, by the first electronic device, a connection to the third electronic device by using the WPA3 encryption.

9. An electronic device, wherein the electronic device comprises a memory and a processor coupled to the memory, the memory stores a computer program, and when the processor executes the computer program, the electronic device is enabled to implement the method according to any one of claims 1 to 8.

10. A computer-readable storage medium, storing computer instructions, wherein when the computer instructions are run on an electronic device, the electronic device is enabled to perform the method according to any one of claims 1 to 8.
